# EUROPEAN PATENT SPECIFICATION

(11) **EP 3 019 297 B1**
(45) Date of publication and mention of the grant of the patent: **21.06.2017**
(21) Application number: 14714788.8
(22) Date of filing: 03.03.2014
(51) Int. Cl.: B23K 9/04, B23K 9/23, B23K 9/235, B22D 17/00

(54) **METHOD OF COATING WITH METALLIC MATERIAL BODIES MADE OF DUCTILE IRON**
VERFAHREN ZUR BESCHICHTUNG VON ELEMENTEN AUS DUKTILEM GUSSEISEN MIT EINEM METALLISCHEN MATERIAL
PROCÉDÉ D'ENROBAGE, AVEC UN MATÉRIAU MÉTALLIQUE, DE CORPS CONSTITUÉS DE FONTE DUCTILE

(30) Priority: 29.07.2013 IT MI20131271
(43) Date of publication of application: 18.05.2016
(73) Proprietor: D.G. Weld S.r.l., 21100 Varese (VA) (IT)
(72) Inventor: GIAMBERINI, Luca, 21040 Gornate Olona (VA) (IT)
(74) Representative: Lisa, Elisabetta
(86) International application number: PCT/IB2014/059393
(87) International publication number: WO 2015/015323

(56) References cited:
- EP-A1- 2 540 433
- WO-A1-2009/090622
- GB-A- 1 475 300
- JP-A- S56 102 373

## Description

### TECHNICAL FIELD

The present invention relates to the field of the coating of ductile iron bodies by means of a layer made of a more wear/corrosion resistant material, and in particular to a method of coating with metal material a body of ductile iron according to the preamble of claim (see, for example, WO2009/090622 A1).

### PRIOR ART

The fact of coating ductile iron bodies with a more resistant material layer is necessary when, in use, wear and/or corrosion phenomena occur which would cause the ductile iron body to be unusable within a short time. This particularly occurs in the field of die-casting of aluminium: the main components of these machines are usually made of ductile iron, but they cannot be successfully used if they are not equipped with a suitable coating; in this case the ductile iron would be easily exposed to corrosion/wear phenomena, causing the machine not to be usable anymore in a relatively short time.

Therefore it is known in the prior art coating the working surface of the ductile iron body (in this case the back plates of the dies) with a more wear/corrosion resistant metal layer, that due to its properties, is less subjected to such corrosion/wear phenomena.

The known techniques for making such coating substantially are to spray a thin layer of Nickel alloys on the ductile iron body, as illustratively described in EP 2 540 433 A1.

Such techniques are known in the prior art as "plasma coating" or more generally as "powder spraying".

The Nickel powder binds itself to the ductile iron mainly by a mechanical bond, which on the whole is too much weak and instable to guarantee an effective protection of the ductile iron body for a long time.

The thickness of the Nickel layer, due to the application, is very thin, in the order of few tenths of millimeter.

This (together with the "weak" mechanical bond between the coating and the ductile iron) causes such thin coating to be particularly subjected to wear and to fatigue cycles, especially when the body of ductile iron is subjected to cyclic loads and to corrosion, resulting in that, sometimes, a part of the Nickel coating gets detached from the underlying ductile iron.

It is possible to recover such coating only by removing the previous one and by restoring a new complete layer.

It has to be noted, by the way, that dies for aluminium die-casting are frequently used in the "automotive" field and a stop in the plants, necessary for recovering the coating, leads to non-acceptable costs in this field.

Therefore it is clear how in the prior art a technique for laying down a resistant layer of metal material on a ductile iron body such to overcome these drawbacks is not currently available.

It is generally known that one of the materials most resistant to wear/corrosion is stainless steel (inox steel), but the fact of coating with stainless steel a ductile iron body was not considered advisable in the prior art.

Ductile iron contains high amounts of carbon and when subjected to high thermal stresses (such as welding with stainless steel as the filler material for instance) it tends to modify its structure, dispersing the carbon which is delimited and uniformly distributed in the graphite "nodules".

The dispersion of carbon and the migration of these molecules in the hotter areas lead to surfaces that are brittle and subjected to breaking.

This migration associated with the supply of stainless steel, rich in chromium, leads to the formation of chromium carbides.

This excess in carbides leads to very hard and very brittle structures and moreover the excess in the carbon migration causes also all the chromium to migrate towards the carbon leaving wide chromium "depleted" regions, which results in subsequent intergranular corrosion attacks.

The person skilled in the art therefore would have not think of laying down a layer of stainless steel on a ductile iron body in order to avoid corrosion thereof, since the known teachings, such as those shown in GB 1 475 300 A and in JP S56 102373 A, were directed in a diametrically opposite direction.

### OBJECTS AND SUMMARY OF THE INVENTION

It is the object of the present invention to overcome the prior art drawbacks. Particularly it is the object of the present invention to provide a method of coating with stainless steel bodies of ductile iron which is able to make a thick and strong coating, such to be used for a long time.

The idea at the base of the present invention is to apply, by welding, a plurality of beads of stainless steel on the body of ductile iron.

The Applicant, acting against the prejudices of the prior art, has considered interesting to investigate in this direction in order to provide a method for coating with stainless steel of ductile iron bodies based on the application of the stainless steel coating by welding.

After several tests and studies the Applicant has developed the method subject of the invention, according to claim 1.

Shortly the method comprises the steps of:
- drying the ductile iron body at least by heating said surface to be coated and
- lining (or coating with) a coating layer of stainless steel on the surface to be coated by pulsed arc welding with stainless steel as filler material, said welding being made directly on the ductile iron, that is on the surface to be coated, without the need of interposing any other material.

Further advantageous features are the subject of the dependent claims, which are an integral part of the present description.

The Applicant has noted that the removal of moisture and of the volatile matter from the processing oils impregnating the ductile iron body is a condition necessary and considerably favorable for preparing the material for the following welding operation lining the real stainless steel.

It is reminded that the ductile iron is intrinsically porous: the heating and the following drying at least of the surface to be coated allows moisture and processing oils to be removed.

The pulsed arc welding, preferably in the so called "spray arc" mode, allows a layer of stainless steel to be deposited on the ductile iron surface to be coated, with a thickness that easily reaches (and possibly overcomes) 3 millimeters, without the welding operation involves a considerable thickness of the ductile iron body.

The Applicant has noted in its studies that it is necessary to have a penetration that is contemporaneously the smallest on but enough for a good bond: this is achieved by a pulsed arc welding.

Generally, as it can be easily noted from now on, the method of the present invention guarantees higher thicknesses of the coating and a more resistant bond of the Nickel coating to the underlying ductile iron, and it prevents martensitic structures to be generated in the body, which are brittle.

Particularly, a ductile iron plate for aluminium die-casting machines made by the method of the invention, advantageously is much less subjected to wear and/or corrosion, with a considerably longer time of use.

Moreover the method of the invention allows advantageously the stainless steel layer to be repaired by simple welding, by lining again a layer of stainless steel if the previous one is worn, with the necessary time being no long as in the prior art.

### BRIEF DESCRIPTION OF THE DRAWINGS

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by similar reference numerals.
Figure 1 is a sectional view of a ductile iron body during the welding step of the method of the invention;
Figure 2 is a plan view of the body of fig.1;
Figure 3 is a sectional view of a detail of the body of fig.1, during the welding step of the method of the invention;
Figure 4-8 are images of the microstructure of a sample made by the method of the invention analyzed by the electronic microscope;
Figure 9 is a hardness curve obtained from the sample analyzed in figs. 4-8.

### DETAILED DESCRIPTION OF THE INVENTION

While the invention is susceptible of various modifications and alternative forms, some disclosed relevant embodiments are shown in the drawings and will be described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

The use of "for example", "etc", "or" indicates non-exclusive alternatives without limitation unless otherwise defined. The use of "including" means "including, but not limited to," unless otherwise defined.

The Applicant has noted that, although the prejudices of the prior art, under certain conditions it is possible to think of making a coating layer of stainless steel or inox steel on a surface of a ductile iron body, by lining said layer of stainless steel by a welding process.

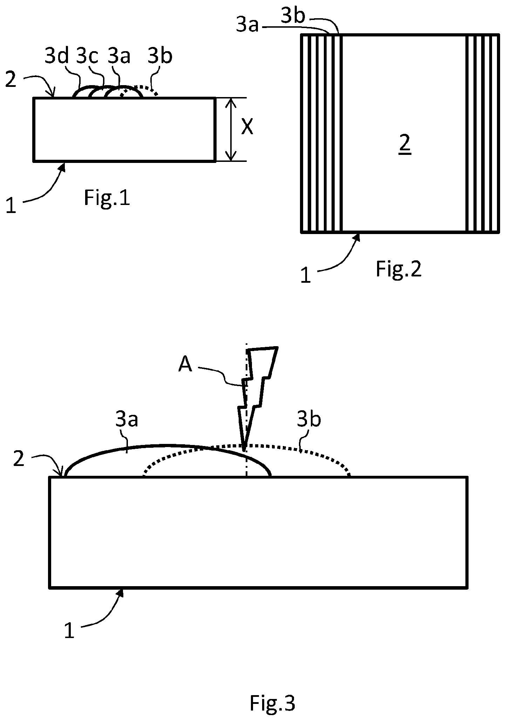

Particularly, the Applicant has developed a method subject of the invention that in its broad outlines (with reference to figs. 1-3) comprises the following steps:
a. preparing a body 1 of ductile iron with at least a surface 2 intended to be coated, a thickness X of said body 1 being identifiable in a direction orthogonal to said surface 2 intended to be coated;
b. drying by heating at least a part of the surface 2 to be coated;
c. lining a layer of stainless steel 3a,3b,3c,3d on said surface 2 to be coated by pulsed arc welding with stainless steel as filler material, said welding being made directly on said surface 2 to be coated.

In pratice the stainless steel coating layer is composed of a plurality of weld beads 3a,3b,3c,3d parallel to each other and adjacent two by two, covering the entire surface 2 to be coated.

In figs. 1-3 the body 1 of ductile iron is plate-like-shaped, that is it has a dimension prevailing over the other two and a surface 2 to be coated is identified therein, in this case corresponding to one of the larger faces.

The thickness X of the body 1, in this example, is constant but it is obvious that with different shapes of the body 2 it may change from region to region at different portions of the surface 2 to be coated.

The considerations below are about a constant thickness X, corresponding to the most frequent case wherein the body 1 is a back plate of ductile iron for dies for the die-casting of aluminium pieces; in the light of the considerations that will be made here and of the teachings of the invention the person skilled in the art will easily adapt the method as the thickness X changes in shapes of the body 1 different than the plate-like one described herein for simplicity reasons.

On the body 1, at and on the surface 2 a plurality of weld beads 3A, 3B is laid down by pulsed arc welding, preferably of the "spray arc" type (known in sè), which constitute, all together, the coating layer of stainless steel.

It has to be noted that by the method of the invention the weld beads are laid down directly on the ductile iron, with no other coatings, that is without the need for the latter of being coated with other materials (such as for instance Nickel).

This advantageously leads to a time and cost saving in preparing and implementing the method of the invention.

Especially the applicant has noted that the drying step b. comprises the steps of:
b1. heating at least part of the body 1 at the surface 2 to be coated at a temperature, measured at said surface 2 to be coated, ranging from 150°C to 180°C;
b2. keeping said temperature for a period of time almost equal to an hour for each 30 millimeters of thickness X of the body measured at the surface 2 to be coated. In the example the thickness X is constant throughout all the surface therefore the value of the period of time for keeping the heating temperature will be the same for the whole surface 2 and therefore for the body 1, after all.

Advantageously, in order to perform such local heating one or more heating elements are used, particularly of the shielded type, which are placed in non-direct contact with a part of the surface to be coated but leaving a certain distance between the heating elements and the surface to be coated so that hot air can flow, such to perform such heating.

If the surface 2 is quite wide or if it has complex shapes it is possible to use a plurality of heating elements connected with each other by a supporting frame that is made if necessary for each single application, depending on needs; making of such frame and arrangement of the heating elements for generating the heating is within the reach of the person skilled in the art in the light of information given up to now herein and of its knowledge.

According to what disclosed above the Applicant has noted that such heating and drying allow moisture and the volatile matter of the processing oils to be removed which obviously impregnate the ductile iron body 1.

Thus an optimal preparation of the surface 2 is obtained which makes it available for the pulsed arc welding operation such to line the real stainless steel layer thereon. Turning now to the real welding step, and with reference to figure 3, the method provides to lay down weld beads 3A,3B adjacent to one another (two by two) and substantially parallel.

Particularly each new bead 3B is laid down by starting an electric arc on a bead 3A already previously laid down.

This factor is considerably advantageous: starting the electric arc A (that generates the heat necessary for creating the weld pool) on the bead 3A previously laid down instead of on the ductile iron surface 2 allows the penetration of the weld pool to be limited and therefore a smaller part of the ductile iron body is involved.

This in turn allows a weld pool to be generated wherein the dilution with the ductile iron of the body is limited (ideally a maximum of 5% of dilution) and which therefore involves a lower supply of heat to the body of ductile iron: thus it is possible to have contempoeraneoulsy a good resistance to corrosion and not to macroscopically alter the structure of the ductile iron.

The superimposition or superposition between two beads 3A,3B is usually called in technical jargon as "overlapping".

It has to be noted by the way that usually in the prior art the overlapping is of 50% in order to have welding with high mechanical properties, that is to say that in order to lay down a new bead the electric arc is directed at the point where the adjacent bead ends: in these cases therefore the electric arc is triggered at the interface between the already laid down bead and the substrate (or body): this is advisable, in the prior art generally related to welding, in order to cause the weld pool to considerably involve the substrate.

On the contrary in the method of the invention the Applicant has noted that the best results are achieved by an overlapping ranging from 35% to 45%, preferably equal to about 40% of the already laid down bead 3A measured along a section transversal to the bead 3A.

In its experiments the Applicant has noted that an overlapping lower than 35% leads to a bad melting and to a too poor bond (anchoring) of the stainless steel with the ductile iron, while an overlapping greater than 45% leads to an excessive "dripping" of the base material, with an excessive dilution and a non optimal thermal alteration of the ductile iron.

According to a further advantageous expedient the welding is performed by using the "skip welding" principle, that is weld beads 3A,3B are laid down adjacent to one another in different time (meaning not immediately consecutive times), in order to prevent the body 1 from being overheated, which can thermally alter the ductile iron.

Thus for example in a body 1 such as that one of fig.2 firstly a bead will be laid down on the right, then one on the left, then again a bead on the right and so on, till completely covering the surface 2; obviously different shapes of the body 1 lead to lay down the beads in different times, which can be selected by the person skilled in the art.

In this sense the Applicant has found advantagoues, during the welding operation, to keep the temperature of the body 1 in proximity of the surface 2 to be coated at values ranging from 80° to 120°C.

This temperature, in jargon, is also called as interpass temperature and it is the temperature of the entire body 1: the temperature of the triggering electric arc and of the weld pool is obviously higher but the input energy is low enough for not increasing the mass of the body above 120 degrees; such a result is achieved also due to the contribution of the "skip welding" that avoids local overheating.

This aspect, that is keeping the temperature in the preferred range, can be obtained by properly setting the sequence of the beads to be laid down on the surface 2 and by knowing the other parameters of the process, all data being available for the person skilled in the art, who therefore in the light of the teachings can set such a sequence without involving any inventive step.

In order to get the best results the Applicant has also noted that the welding gas has to comprise about 98% of Argon and 2% of CO₂ and that the stainless steel of the wire of the welding machine has to be Stainless Steel 307 with 7% of Manganese.

The goodness of the results achievable by the method of the invention is clear from the analyses that have been made by the Applicant on some samples and which are shown herein with no limitation, but as an example.

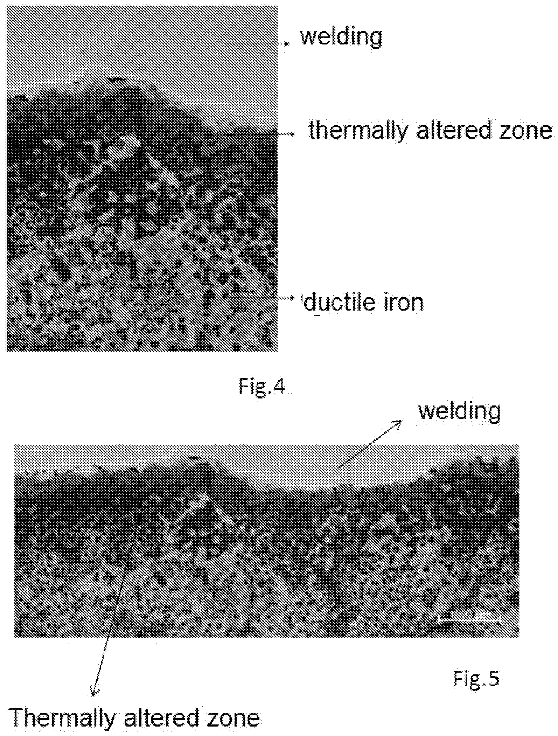

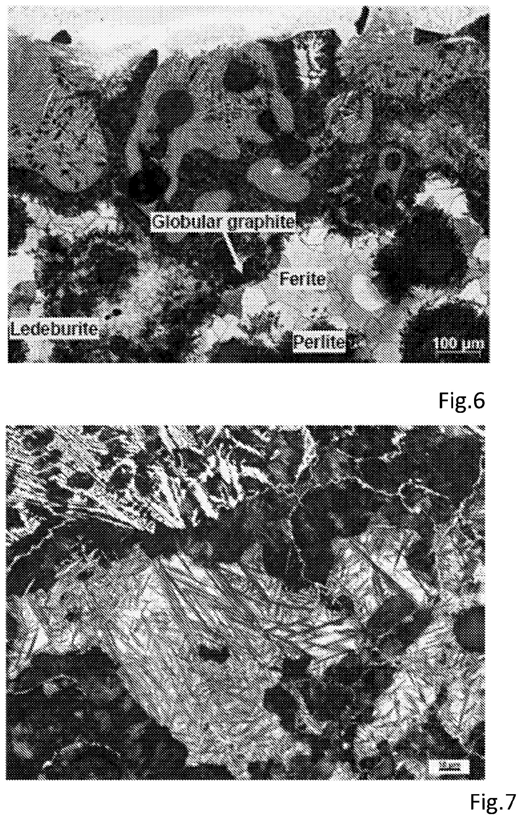

Figures 4-8 are images of the microstructure of a sample (obtained by the method of the invention) analyzed with an electronic microscope ZEISS-Observer.Z1m.

By observing the figures 4-8 it is noted that the transformation of the substrate takes place, as provided, but that the thickness of the "heat affected zone" (or thermally altered zone) is low and has a minimum amount (lower than 1mm).

The structure returns to be pearlite, ledburite and ferrite with the carbon contained in the graphite nodules immediately after.

Analysis of the welding by an optical emission spectrometer such as Bruker Q4 TASMAN (program Fe130) highlights how, by following the method of the invention, the following values of chemical composition of the welding are obtained:

| **C** | **Si** | **Mn** | **P** | **S** | **Cr** | **Mo** | **Ni** | **Cu** | **Al** |
|---|---|---|---|---|---|---|---|---|---|
| 0.259 | 0.876 | 6.592 | 0.019 | 0.005 | 17.954 | 0.033 | 8.590 | 0.026 | 0.005 |

| **As** | **B** | **Ce** | **Co** | **Mg** | **N** | **Nb** | **Pb** | **Sb** | **Sn** |
|---|---|---|---|---|---|---|---|---|---|
| 0.004 | <0.001 | | 0.029 | | 0.055 | 0.015 | | | 0.002 |

| **Ta** | **La** | **Ti** | **V** | **W** | **Zn** | **Zr** | **Se** | **Fe** | |
|---|---|---|---|---|---|---|---|---|---|
| | | 0.004 | 0.139 | 0.021 | | | | 65.372 | |

This leads to the fact that the dilution of carbon in the stainless steel pool is lower than 5% thus guaranteeing a minimal formation of chromium carbides; the low dilution is also a sympton of a low penetration and therefore of a reduced introduction of heat in the ductile iron substrate.

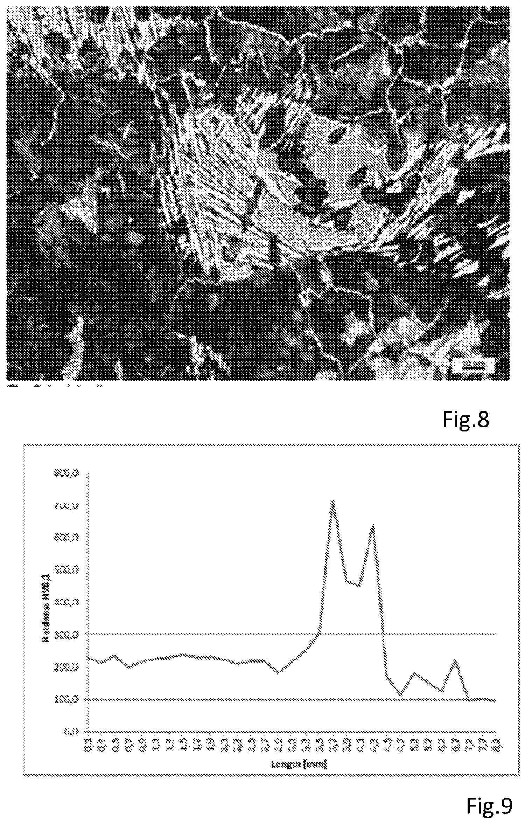

By the generation of the chart of the hardness curve of the sample a pattern is found as that in fig.9, which shows a martenistic layer in the thermally altered zone: it is noted how the hardnesses quickly increase in the transition zone, which however remains limited to few tenths of millimeter.

This underlies also the prejudices of the prior art: a supply of a standard welding heat could lead to the generation of a structurally very brittle and dangerous area, while according to the teachings of the present invention such structurally very brittle and dangerous area can be limited to few tenths of millimeter.

Therefore the aims defined above are achieved.

## Claims

1. Method of coating with metal material a body (1) of ductile iron comprising the following steps:
a. preparing a body (1) of ductile iron with at least a surface (2) intended to be coated, a thickness (X) of said body (1) being identifiable in direction orthogonal to said surface (2) intended to be coated, and **characterised by** the following steps :
b. drying by heating at least said surface (2) to be coated;
c. lining a layer of stainless steel on said surface (2) to be coated by pulsed arc welding with stainless steel as filler material, said welding being made directly on said surface (2) to be coated.

2. Method according to claim 1, wherein said drying step b. comprises the steps of:
b1. heating at least part of said body (1) at said surface to be coated (2) at a temperature, measured at said surface to be coated (2), ranging from 150°C to 180°C;
b2. keeping said temperature, of step b1, for a period of time almost equal to an hour for each 30 mms of thickness (X) of the body measured at said surface (2) to be coated.

3. Method according to claim 1 or 2, wherein said heating is obtained by way of an heating element, in particular shielded heating element, placed in proximity of at least part of said surface to be coated, without direct contact between the two of them.

4. Method according to one of the preceding claims, wherein said step c. comprises the steps of laying weld beads (3A,3B) adjacent to one another, wherein a new bead (3B) is laid by starting an electric arc on a bead (3A) already previously laid down.

5. Method according to one of the preceding claims, wherein said step c. comprises the step of making a weld pool (10) comprising a dilution with the ductile iron of said body substantially lower than 5%.

6. Method according to one of the preceding claims, wherein said step c. comprises the step of keeping the temperature of said body (1) in proximity of said surface (2) to be coated at values ranging from 80°C to 120°C.

7. Method according to one of claims 4 to 6, wherein said steps of laying weld beads (3A,3B) adjacent to one another are made in different times, in order to avoid overheating of said body (1).

8. Method according to one of claims 4 to 7, wherein said steps of laying weld beads (3A,3B) adjacent to one another provides to make an overlapping between a new bead (3B) and a bead (3A) already previously laid down ranging between 35% to 45%, preferably 40% of the bead (3A) previously laid down measured along a section transversal to the bead (3A,3B).

9. Method according to one of the preceding claims, wherein said pulsed arc welding, preferably in a so called "spray arc" mode, provides for the use of a welding gas comprising about 98% Argon and 2% CO₂ and wherein preferably said stainless steel is Stainless Steel 307 with 7% of Manganese.

## Patentansprüche

1. Verfahren zur Beschichtung eines Körpers (1) aus duktilem Eisen mit Metallmaterial, mit den folgenden Schritten:
a. Vorbereiten eines Körpers (1) aus duktilen Eisen mit wenigstens einer Oberfläche (2), die beschichtet werden soll, wobei eine Dicke (X) des Körpers (1) in einer Richtung senkrecht zu der Oberfläche (2), die beschichtet werden soll, erkennbar ist, **gekennzeichnet durch** die folgenden Schritte:
b. Trocknen wenigstens der zu beschichtenden Oberfläche (2) durch Aufheizen,
c. Aufbringen einer Schicht aus Edelstahl auf die zu beschichtende Oberfläche (2) durch Impulslichtbogenschweißen mit Edelstahl als Füllmaterial, wobei das Schweißen direkt auf der zu beschichtenden Oberfläche (2) vorgenommen wird.

2. Verfahren nach Anspruch 1, wobei der Trocknungsschritt (b) die Schritte des:
b1.Aufheizens wenigstens eines Teils des Körpers (1) an der zu beschichtenden Oberfläche (2) auf eine Temperatur, die an der zu beschichtenden Oberfläche (2) zu messen ist, im Bereich von 150°C bis 180°C,
b2. Halten der Temperatur von Schritt b1 für eine Zeitdauer, die im Wesentlichen einer Stunde für jeweils 30 mm der Dicke (X) des Körpers beträgt, die an der zu beschichtenden Oberfläche (2) zu messen ist.

3. Verfahren nach Anspruch 1 oder 2, wobei das Heizen mittels eines Heizelements, insbesondere eines abgeschirmten Heizelements, vorgenommen wird, das in der Nähe von wenigstens einem Teil der zu beschichtenden Oberfläche ohne direkten Kontakt zu ihr angeordnet ist.

4. Verfahren nach einem der vorstehenden Ansprüche, wobei der Schritt c die Schritte des Setzens von an einander angrenzenden Schweißraupen (3A, 3B) enthält, wobei eine neue Schweißraupe (3B) erzeugt wird, indem ein Lichtbogen auf einer Schweißraupe (3A) gestartet wird, die bereits zuvor gesetzt wurde.

5. Verfahren nach einem der vorstehenden Ansprüche, wobei der Schritt c den Schritt des Erzeugens eines Schmelzbads (10) umfasst, das eine Verdünnung mit dem duktilen Eisen des Körpers von wesentlich weniger als 5% enthält.

6. Verfahren nach einem der vorstehenden Ansprüche, wobei der Schritt c den Schritt des Haltens der Temperatur des Körpers (1) nahe an der zu beschichtenden Oberfläche bei Werten im Bereich von 80°C bis 120°C umfasst.

7. Verfahren nach einem der Ansprüche 4 bis 6, wobei die Schritte des Setzens von an einander angrenzenden Schweißraupen (3A, 3B) zu verschiedenen Zeitpunkten vorgenommen werden, um ein Überhitzen des Körpers (1) zu vermeiden.

8. Verfahren nach einem der Ansprüche 4 bis 7, wobei die Schritte des Setzens von an einander angrenzenden Schweißraupen (3A, 3B) einen Überlapp zwischen einer neuen Schweißraupe (3b) und einer zuvor erzeugten Schweißraupe (3a) im Bereich von 35% bis 45%, vorzugsweise 40% der zuvor erzeugten Schweißraupe (3A), schaffen, der entlang einer quer zu der Schweißraupe (3A, 3B) verlaufenden Schnittlinie zu messen ist.

9. Verfahren nach einem der vorstehenden Ansprüche, wobei die gepulste Lichtbogenschweißung, vorzugsweise in einem sogenannten Sprühlichtbogenmodus, den Einsatz eines Schweißgases vorsieht, das ungefähr 98% Argon und 2% CO₂ enthält, und wobei der Edelstahl vorzugsweise Edelstahl 307 mit 7% Mangan ist.

## Revendications

1. Procédé de revêtement par une matière métallique d'un corps (1) de fonte ductile, comprenant les étapes suivantes :
a. préparer un corps (1) de fonte ductile doté d'au moins une surface (2) destinée à être revêtue, une épaisseur (X) dudit corps (1) étant identifiable dans une direction orthogonale à ladite surface (2) destinée à être revêtue,
et **caractérisé par** les étapes suivantes :
b. sécher par chauffage au moins ladite surface (2) à revêtir ;
c. revêtir d'une couche d'acier inoxydable ladite surface (2) à revêtir par soudage à arc pulsé avec de l'acier inoxydable comme matière d'apport, ledit soudage étant effectué directement sur ladite surface (2) à revêtir.

2. Procédé selon la revendication 1, dans lequel ladite étape de séchage b. comprend les étapes consistant à :
b1. chauffer au moins une partie dudit corps (1) à ladite surface à revêtir (2) à une température, mesurée à ladite surface à revêtir (2), se situant dans la plage de 150°C à 180°C ;
b2. maintenir ladite température, de l'étape b1, pendant une période de temps presque égale à une heure pour chaque 30 mm d'épaisseur (X) du corps mesurée à ladite surface (2) à revêtir.

3. Procédé selon l'une des revendications 1 ou 2, dans lequel ledit chauffage est obtenu au moyen d'un élément chauffant, en particulier un élément chauffant blindé, placé à proximité d'au moins une partie de ladite surface à revêtir, sans contact direct entre les deux.

4. Procédé selon l'une des revendications précédentes, dans lequel ladite étape c. comprend les étapes consistant à déposer des cordons de soudure (3A, 3B) de manière adjacente l'un à l'autre, un nouveau cordon (3B) étant déposé en démarrant un arc électrique sur un cordon (3A) déjà déposé au préalable.

5. Procédé selon l'une des revendications précédentes, dans lequel ladite étape c. comprend l'étape consistant à réaliser un bain de fusion (10) comprenant une dilution avec la fonte ductile dudit corps sensiblement inférieure à 5 %.

6. Procédé selon l'une des revendications précédentes, dans lequel ladite étape c. comprend l'étape consistant à maintenir la température dudit corps (1) à proximité de ladite surface (2) à revêtir à des valeurs se situant dans la plage de 80°C à 120°C.

7. Procédé selon l'une des revendications 4 à 6, dans lequel lesdites étapes consistant à déposer des cordons de soudure (3A, 3B) de manière adjacente l'un à l'autre sont effectuées à différents moments, afin d'éviter une surchauffe dudit corps (1).

8. Procédé selon l'une des revendications 4 à 7, dans lequel lesdites étapes de dépôt de cordons de soudure (3A, 3B) de manière adjacente l'un à l'autre comportent la réalisation d'un chevauchement entre un nouveau cordon (3B) et un cordon (3A) déjà déposé au préalable se situant dans la plage de 35 % à 45 %, de préférence 40 % du cordon (3A) déposé au préalable, mesuré le long d'une section transversale au cordon (3A, 3B).

9. Procédé selon l'une des revendications précédentes, dans lequel ledit soudage à arc pulsé, de préférence dans un mode dit « arc de pulvérisation », comporte l'utilisation d'un gaz de soudage comprenant environ 98 % d'Argon et 2 % de CO₂, et dans lequel, de préférence, ledit acier inoxydable est l'Acier Inoxydable 307 avec 7 % de Manganèse.
